# EUROPEAN PATENT APPLICATION

(11) **EP 1 371 291 A1**
(43) Date of publication of application: **17.12.2003**
(21) Application number: 03011036.5
(22) Date of filing: 19.05.2003
(51) Int. Cl.: A21B 3/04

(54) **Humidity sensing and adjusting device, particularly in a food oven**

(30) Priority: 21.05.2002 IT TV20020061
(71) Applicant: Olis S.p.A., 32036 Sedico - Frazione Bribano (Prov. of Belluno) (IT)
(72) Inventor: Toffolet, Milo, 32030 Cesiomaggiore (Pro. of Belluno) (IT)
(74) Representative: Modiano, Guido, Dr.-Ing.

(57) **Abstract**

A device for sensing and adjusting humidity, usable particularly in an oven for food. The oven (2) comprises a first compartment (6) that is temporarily accessible and can be heated by way of first heating means (7), first temperature sensing devices (9) being able to sense the temperature inside the first compartment. The first compartment further has a first opening (10) that is connected to a hollow sleeve (11) that is connected in an upper region to a second opening provided in a hollow body (13) that dissipates heat energy.

## Description

The present invention relates to a device for sensing and adjusting the humidity inside an enclosed space, such as for example the cooking chamber of a food oven.

Home and industrial ovens of a known type, suitable to cook food for eating, are currently in use.

All ovens comprise a cooking chamber, which is closed and thermally insulated from the outside, can be accessed temporarily by the user by opening a door, and is suitable to contain the food to be cooked.

Every oven further comprises heating means, which are advantageously powered by electric current or gas, in order to raise the temperature of the cooking chamber until it reaches and maintains a value that is chosen by the user.

Some ovens further comprise known types of device for measuring the humidity inside the cooking chamber, which are usually suitable to control additional devices for adjusting the humidity according to a preset value.

GB-2,207,514 is known, for example, which discloses a device for measuring atmospheric humidity in an oven, which comprises a container that is accommodated inside the oven and is constituted by a box-like enclosure made of thermally insulating material, which can be closed in an upper region by means of a lid made of a material that conducts heat well.

Such device further comprises means for cooling the outer surface of the lid which do not alter the temperature of the cooking chamber of the oven, a temperature sensor being associated with the lid and being suitable to detect the temperature of its outer surface.

An electronic board, connected to the sensor, controls the cooling means and receives and records the temperature data measured by the sensor as a function of time, so as to calculate the humidity by estimating the inflection point of the temperature-time curve after interrupting the cooling means.

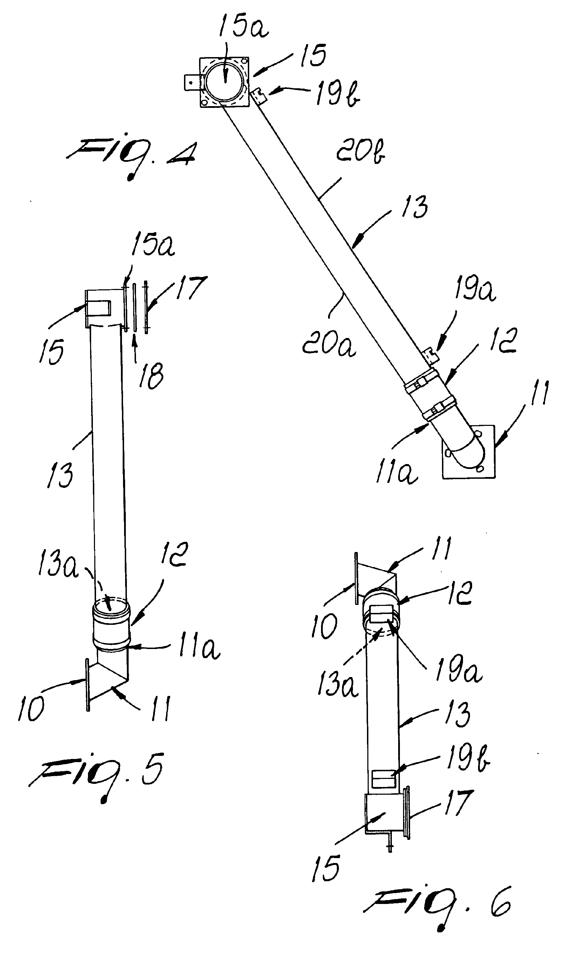

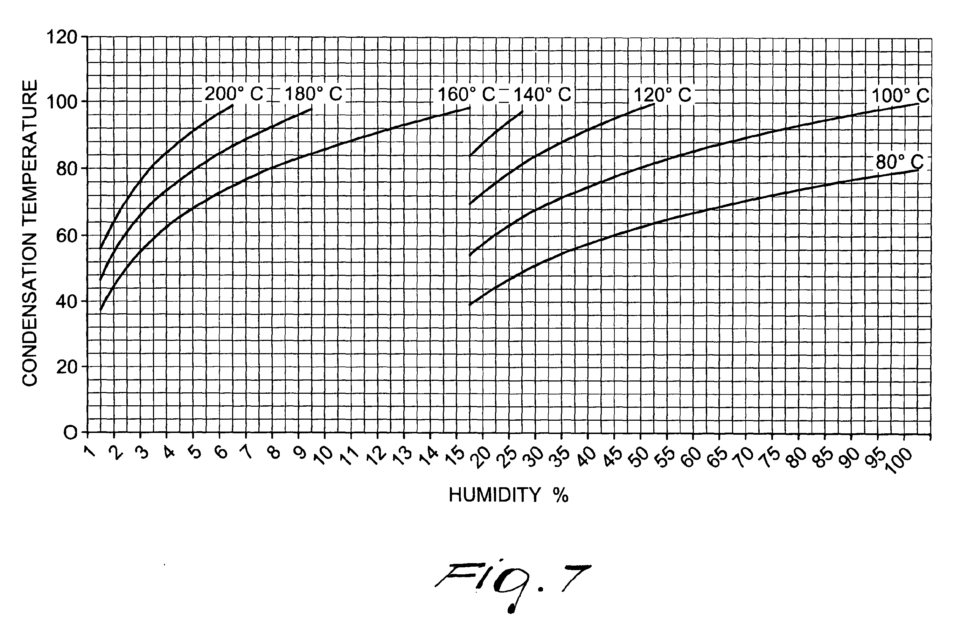

It is known in fact from physical laws of thermodynamics that at a constant pressure the condensation temperature of the water vapor that is present in the air can be determined univocally once the temperature of the air is known: for this purpose it is possible to use, for example, the chart of Figure 7, which is derived from the well-known Mollier chart.

EP-567,813 is also known which illustrates a humidity measurement device for apparatuses for heating and/or cooking devices, such as a food cooking oven, which comprises at least one cooking chamber connected to another chamber that is separated by means of a dividing wall.

Said known type of measurement device comprises a metallic body that is a good heat conductor, is introduced through said dividing wall and is isolated thermally from it, so that it is inserted with a first end in the cooking chamber and with a second end in the additional chamber.

The second end of the metallic body is connected to heat dissipation means, which are preferably arranged within the additional chamber.

There are also first and second temperature sensing means, which are respectively associated with the first and second ends of the metallic body, and third temperature sensing means, which are inserted within the cooking chamber.

The first, second and third sensing means are connected to control means that are suitable to store encoded information that corresponds to the temperature ranges that can be reached at the first and second ends and at the cooking chamber; said control means are also preset so as to determine automatically the humidity of the air inside the cooking chamber, according to the levels of the temperatures measured simultaneously, at the water vapor condensation temperature of the air.

The main drawback of these conventional measurement devices is that the cooled surfaces where the water vapor present in the air condenses easily become dirty due to the fats and liquids that remain in suspension during cooking.

Another drawback is that the metallic body, by protruding into the cooking chamber, can be damaged accidentally by impact with objects such as baking pans and pots.

Another drawback is that known types of device often require complex apparatuses and/or means for dissipating heat, which also comprise fans and ducts for circulating cooling fluids and/or finned bodies.

These last further have the drawback that they are difficult to clean of the dirt that usually deposits on them over time, accordingly entailing a reduction in efficiency.

Another problem of these known types of device is that the water that condenses on the metallic body, depending on the shape of said body, tends to stagnate thereon to a greater or lesser extent, causing a variation in the measurement that in some cases can be considerable.

The aim of the present invention is to solve the above-mentioned problems, eliminating the drawbacks of the cited known art, by providing a device for sensing and adjusting the humidity in an oven that allows to take measurements that are always accurate over time.

Within this aim, an object of the invention is to provide a device that is tough and difficult to damage, even accidentally, on the part of the user.

Another object is to provide a device that can be inspected easily in order to perform testing or cleaning.

Another object is to provide a device that operates in an optimum manner even without the presence of apparatuses and devices such as for example auxiliary fans or ducts for cooling fluids.

Another object is to provide a device that can operate effectively over a wide range of cooking temperatures.

Another object is to provide a device that is structurally simple and has low manufacturing costs.

This aim and these and other objects that will become better apparent hereinafter are achieved by a device for sensing and adjusting humidity, particularly in an oven that comprises a first compartment that is temporarily accessible for containing food and comprises first heating means for said first compartment and first devices for sensing the temperature inside said first compartment, characterized in that said first compartment has a first opening connected to a hollow sleeve, which is connected in an upper region to a second opening formed in a lower region with respect to a hollow body that dissipates heat energy and is accommodated in a gap that is thermally insulated from said first compartment, said sleeve comprising at least one thermally insulating element for interrupting the thermal bridge with said hollow body with which at least one second temperature sensing device is associated, said second sensing device being connected to second means for calculating the humidity of said first compartment and for controlling third means for adjusting the humidity as a function of a value that is set in each instance by the user.

Further characteristics and advantages of the invention will become better apparent from the following detailed description of a particular embodiment thereof, illustrated by way of non-limitative example in the accompanying drawings, wherein:

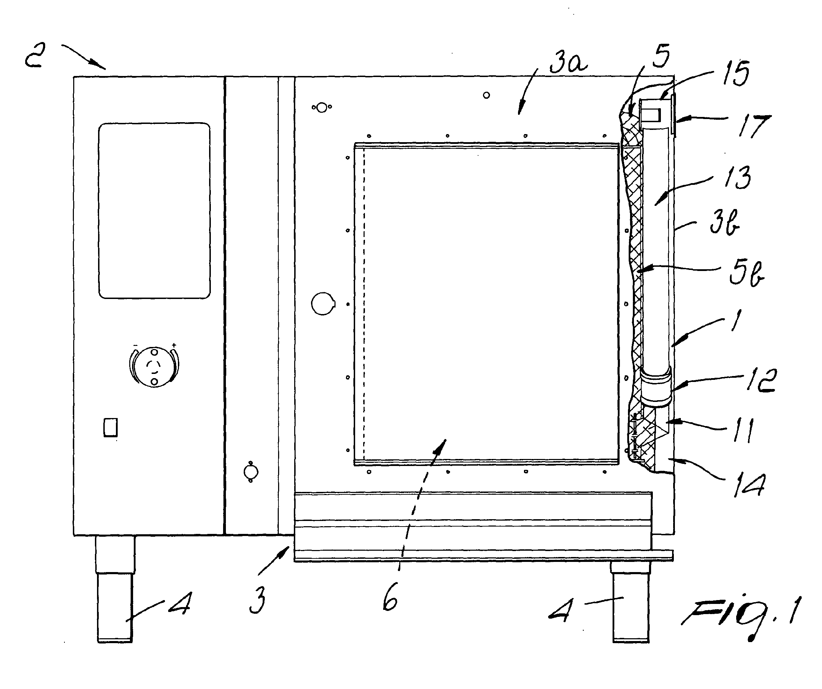

Figure 1 is a partially sectional front view of an oven provided with the illustrated sensing device;

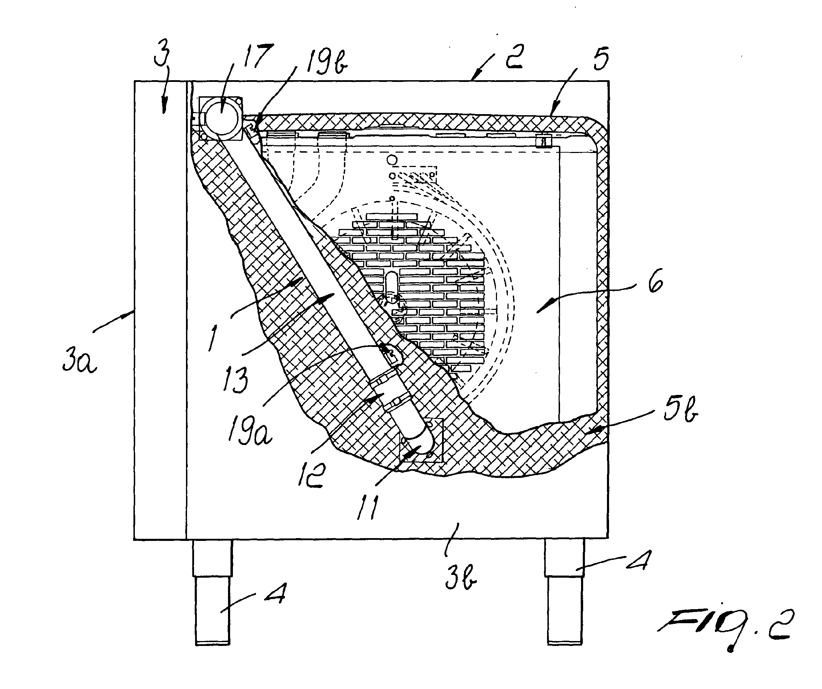

Figures 2 and 3 are partially sectional side and plan views, respectively, of the invention;
Figures 4 to 6 are respectively a side view, a front view and a plan view of the hollow body for dissipating heat energy;
Figure 7 is a chart of humidity percentage and air condensation temperature, which plots a few isothermal curves and is derived from the Mollier chart.

With reference to the figures, the reference numeral 1 designates a device for sensing and adjusting humidity, which can be used in particular to control the humidity in an oven, such as an oven 2 for cooking food.

The oven 2 comprises a box-like frame 3, which is advantageously provided, in a lower region, with a plurality of legs, generally designated by the reference numeral 4, for resting on the ground.

A box-like enclosure, designated by the reference numeral 5, is accommodated inside the frame 3, is shaped approximately like a parallelepiped and is constituted by walls made of insulating material.

The box-like enclosure 5 is provided at the front with an opening that can be closed by means of a door 3a that is part of the frame 3.

In particular, the front door 3a is pivoted to the frame 3 so as to allow temporary access to a first compartment 6 for containing food.

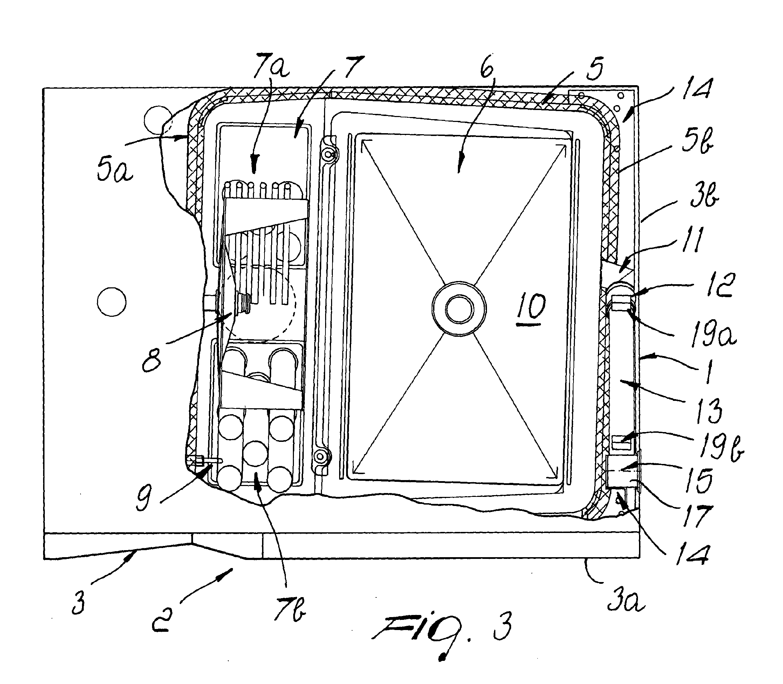

The first compartment 6 can be heated by using first heating means, designated by the reference numeral 7 in Figure 3, which are also accommodated within the box-like enclosure 5, preferably proximate to a first side wall 5a thereof.

The first heating means 7, of a known type, are advantageously constituted for example by electrical resistors 7a or by gas-fired burners for heating heat exchange pipes 7b.

At least one fan 8, suitable to facilitate correct and uniform distribution of hot air inside the first compartment 6, is arranged conveniently proximate to the first heating means 7.

The first compartment 6 also accommodates first temperature sensing devices, designated by the reference numeral 9, which are suitable to sense the temperature T0 inside the first compartment 6, i.e., the cooking temperature of the food.

The first compartment 6 has a first opening, designated by the reference numeral 10, which passes through the entire thickness of the box-like enclosure 5.

In this particular embodiment, illustrated merely by way of example, the first opening 10 is formed at a second side wall 5b that lies opposite the first wall 5a of the box-like enclosure 5.

The first opening 10, which is advantageously but not necessarily circular, is preferably obtained approximately proximate to the lower portion of the second side wall 5b, and is connected to a hollow sleeve 11 that is preferably approximately L-shaped.

The sleeve 11 can be made advantageously of heat-resistant plastics or also of stainless metallic material, such as for example stainless steel, since it does not need to be a good heat conductor.

The upper end 11a of the sleeve 11 is directed upward so that it is connected, in an upper region, to a thermally insulating element 12, such as an annular coupling made of rubber or plastic material.

The thermally insulating element 12 is connected, in an upper region, to a second opening 13a that is formed in a lower region with respect to a hollow body 13, so as to constitute an interruption of the thermal bridge between said body and the sleeve 11.

In the example shown in the figures, the hollow body 13 is constituted by an internally hollow cylindrical tube whose cross-section is approximately equal to the cross-section of the thermally insulating element 12 and of the sleeve 11.

The tube or hollow body 13 is therefore accommodated in a second compartment or gap 14 formed by the interspace between the second side wall 5b of the box-like enclosure 5 and the inner surface of a third side wall 3b of the frame 3.

In this manner, the tube or hollow body 13 is internal to the oven 2 and at the same time is thermally insulated from the first compartment 6 by way of the second side wall 5b.

In particular, the tube or hollow body 13 is arranged in the gap 14 with an oblique orientation, so as to reach the upper portion of the gap 14.

At its upper end, the tube or hollow body 13 has a head, designated by the reference numeral 15, that is advantageously cylindrical and whose axis is perpendicular to the axis of the tube 13.

The head 15 has a third circular opening 15a that faces the third side wall 3b of the frame 3, at a fourth opening 16 that has the same shape and dimensions.

The head 15 is further laterally associated with the third wall 3a so that the third opening 15a and the fourth opening 16 match and can be closed by means of a lid, designated by the reference numeral 17, which is provided with a sealing gasket 18, such as the one known commercially as O-ring.

The lid 18, which can be removed temporarily by the user, allows to inspect the internal surface of the hollow body 13 when the oven 2 is switched off.

When the oven 2 is on, the hot air contained in the first compartment 6 tends to be arranged uniformly in all the accessible spaces, being facilitated in doing so by the forced convection induced by the fan 8.

Accordingly, the hot air also occupies the space inside the tube or hollow body 13 until it reaches the head 15.

The hollow body 13 is preferably made of stainless metallic material, advantageously a metallic material that is a poor heat conductor, such as for example a stainless steel, so as to limit the conduction of heat between the region of the first sensing device 19a and the region of the second temperature sensing device 19b.

The hollow body 13 further has a limited thickness, so as to allow a high dissipation of the thermal energy of the air.

This is allowed by the fact that the outer surface of the tube or hollow body 13 is kept at a relatively low temperature by the unheated air contained in the gap 14, which has suitable slots, not shown, for circulating said air with the outside environment.

The hot air contained in the tube or hollow body 13 is thus cooled by the tube itself, accordingly depositing part of its water vapor in the form of condensed water.

The water, by descending along the inclined surface of the tube or hollow body 13, can return to the first compartment 6 and there evaporate again by way of the high temperature of the air.

A second temperature sensing device 19a and a third temperature sensing device 19b are associated with the tube or hollow body 13 and are arranged respectively proximate to the thermally insulating element 12 and the head 15.

The second and third temperature sensing devices 19a and 19b are conveniently insulated from the surrounding environment, so that they can sense the exact temperature of the tube or hollow body 13 at their region of contact, said temperatures being referenced hereinafter as T1 and T2 respectively.

It is also possible to define, in the tube 13, a lower region, termed "floor" hereinafter and designated by the reference numeral 20a in Figure 4, and an upper portion 20b, hereinafter termed "ceiling".

In this manner, the second and third temperature sensing devices 19a and 19b are preferably associated with the tube 13 at its upper portion and therefore at the upper end of the ceiling 20b.

Since the water that condenses on the entire internal surface of the tube or hollow body 13 descends by gravity toward the floor 20a and from there flows toward the first opening 10, the second and third temperature sensing devices 19a and 19b are influenced minimally by the presence of condensed water inside the tube, since said water never reaches a significant height.

The second and third temperature sensing devices 19a and 19b are further connected to second means, not shown, for calculating the humidity that is present in said first compartment 6.

The second calculation means, advantageously constituted by an electronic control unit, are connected to said first temperature sensing device 9 and comprise a processor that is suitable to calculate the humidity of the air as a function of the temperature of the air and of its condensation temperature, like the Mollier chart of Figure 7.

The condensation temperature used by the second calculation means is alternately the temperature T1 sensed by the second device 19a or the temperature T2 sensed by the third temperature sensing device 19b, depending on the temperature T0 of the air in the cooking chamber, which is sensed by the first temperature sensing device 9.

This is due to the fact that for temperatures T0 that are lower than, or close to, a limit temperature T_{L} that depends on the geometric, mechanical and thermal characteristics of the components of the device (and can be estimated for example at approximately 120 °C), one has a correct reading of the second lower device 19a, since steady-state condensation occurs only at the lower region of the tube or hollow body 13.

Vice versa, for temperatures T0 that are proximate to, or greater than, the limit temperature T_{L}, one has a correct reading of the third upper device 19b, since the lower region of the tube or hollow body 13 is unable to dissipate all of the thermal energy of the air, and therefore once again a steady-state condition is unlikely to be established in this region.

The second calculation means are connected to, and control, separate third means, of a known type and not shown, for adjusting the humidity according to a value that is set in each instance by the user.

Operation is therefore as follows. With reference to the cited figures, during the use of the oven the hot air inside it, at the temperature T0, tends to be arranged uniformly in all the spaces that can be reached, and is facilitated in this process by the presence of the fan 9 inside the first compartment 6.

In this manner, the hot air can reach, through the first opening 10 and the sleeve 11, also the hollow body 13, which has an average temperature that is lower than T0, since it is cooled by natural convection by the air, at a lower temperature, that is present in the gap 14.

The substantial cooling of the hollow body 13 is possible by way of the presence of the interruption of the thermal bridge provided by the thermally insulating element 12 and also by way of the dimensions of the hollow body 13, which has a large surface for exchanging heat with the surrounding cold air.

The hot air, upon contact with the cold surface of the hollow body 13, tends therefore to cool, and the water vapor contained therein condenses partially on the inner surfaces of said hollow body, subsequently returning by gravity toward the sleeve 11 and the first opening 10.

In this process, once a steady-state condition has been reached, the temperatures T1 and T2 read by the second and third temperature sensing devices 19a and 19b correspond approximately to the condensation temperature of the water.

Actually, depending on the temperature T0 of the first compartment 6, the second calculation means use, between the temperature T1 and the temperature T2, the one that best approximates said condensation temperature, and therefore use the temperature T1 when T0 is lower than the limit temperature T_{L} and vice versa use the temperature T2 when T0 is higher than the limit temperature T_{L}.

The control unit of the second calculation means can therefore process the acquired temperature data and, by way of appropriate mathematical correlations derived for example from the chart of Figure 7 or from the Mollier chart, can calculate the relative humidity or percentage of water vapor in air.

It has thus been found that the invention has achieved the intended aim and objects, a device for detecting and adjusting humidity in an oven having been provided which allows to make extremely precise measurements even after a long period of use of the oven, since there are no components located inside the cooking chamber.

The particles suspended in the air of the first compartment, i.e., in the cooking chamber, are in fact usually heavy particles, and in this manner they are unlikely to be able to rise into the hollow body.

In any case, the condensing water that flows inside the hollow body, returning to the first compartment, performs a continuous cleaning of said hollow body; accordingly, the humidity sensing and adjustment device is at least partially self-cleaning.

Moreover, the removable lid allows access from outside, optionally to perform additional cleaning.

Since the temperature sensing devices are arranged in the gap between the first compartment and the frame of the oven, they cannot be accessed by the user and therefore cannot be damaged accidentally by him.

The large external surface of the hollow body allows an adequate dissipation of heat even without the presence of apparatuses or devices such as auxiliary fans or ducts for cooling fluids.

The invention is of course susceptible of numerous modifications and variations, all of which are within the scope of the appended claims.

Thus, for example, it is possible to provide a humidity sensing and adjustment device that comprises a different number of temperature sensing devices, possibly even just two, which can be arranged in different positions with respect to the ones shown here.

Further, the shape of the hollow body can be any, so long as it has a heat exchange surface that is adequate for dissipating the heat conveyed by the hot air.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The disclosures in Italian Patent Application No. TV2002A000061 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for sensing and adjusting humidity, particularly in an oven that comprises a first compartment that is temporarily accessible for containing food and comprises first heating means for said first compartment and first devices for sensing the temperature inside said first compartment, **characterized in that** said first compartment has a first opening connected to a hollow sleeve, which is connected in an upper region to a second opening formed in a lower region with respect to a hollow body that dissipates heat energy and is accommodated in a gap that is thermally insulated from said first compartment, said sleeve comprising at least one thermally insulating element for interrupting the thermal bridge with said hollow body with which at least one second temperature sensing device is associated, said second sensing device being connected to second means for calculating the humidity of said first compartment and for controlling third means for adjusting the humidity as a function of a value that is set in each instance by the user.

2. The device according to claim 1, wherein said oven comprises a frame which contains a box-like enclosure that is advantageously shaped like a parallelepiped and is at least partially made of thermally insulating material, in which said first compartment is formed, **characterized in that** said first opening is formed in one of the walls of said box-like container, preferably in a side wall.

3. The device according to claims 1 and 2, wherein said first heating means are accommodated in said box-like enclosure proximate to a first wall thereof, **characterized in that** said first opening is preferably provided approximately proximate to the lower portion of a second wall of said box-like enclosure.

4. The device according to claims 1 and 3, **characterized in that** said first opening, which is advantageously circular, is provided in said second side wall of said box-like enclosure.

5. The device according to one or more of the preceding claims, **characterized in that** said sleeve, which is hollow and connected in a lower region to said first opening, is preferably approximately L- or V-shaped, with a preferably obtuse angle between the directrices of the two arms.

6. The device according to one or more of the preceding claims, **characterized in that** said sleeve, which is connected to said first opening in a lower region, has a free end that is approximately directed upward so as to connect, by way of said thermally insulating element, to said second opening of said hollow body.

7. The device according to one or more of the preceding claims, **characterized in that** said thermally insulating element is advantageously constituted by an annular coupling that is made of rubber or plastics and is associated with said sleeve and said hollow body at the lower and upper ends.

8. The device according to one or more of the preceding claims, **characterized in that** said hollow body is advantageously constituted by a cylindrical tube that is internally hollow and has approximately the same cross-section as said sleeve.

9. The device according to one or more of the preceding claims, **characterized in that** said hollow body is accommodated entirely in said gap, which is formed by the interspace between said second wall of said box-like enclosure and the internal surface of a third wall of said frame, which conveniently faces said second wall.

10. The device according to claims 1 and 9, **characterized in that** said hollow body is thermally insulated from said first compartment by way of said second wall, which is made of thermally insulating material.

11. The device according to claims 1 and 9, **characterized in that** said hollow body, constituted by an approximately straight tube, is arranged in said gap with an oblique orientation, so as to reach the upper portion of said gap.

12. The device according to claims 1 and 11, **characterized in that** at its upper end said tube or hollow body has a head for connection to said frame.

13. The device according to one or more of the preceding claims, **characterized in that** said head, which is advantageously cylindrical and has an axis that is approximately perpendicular to the axis of said tube or hollow body, has a third opening that faces said third side wall of said frame at a fourth opening thereof that has the same shape and dimensions.

14. The device according to claims 1 and 13, **characterized in that** said head is associated laterally with said third wall, so that said third and fourth wall match and can be closed by means of a removable lid that is advantageously provided with an interposed sealing gasket.

15. The device according to one or more of the preceding claims, **characterized in that** said hollow body has an inclined orientation so as to allow the return of the condensed water toward said first opening and therefore toward the first compartment.

16. The device according to one or more of the preceding claims, **characterized in that** said at least one second temperature sensing device is externally associated with said hollow body, approximately proximate to said thermally insulating element.

17. The device according to one or more of the preceding claims, **characterized in that** it comprises at least one third temperature sensing device, which is advantageously associated externally with respect to said hollow body, approximately proximate to said head.

18. The device according to claims 1, 16 and 17, **characterized in that** said second and third temperature sensing devices are insulated from the surrounding environment so that they can sense the exact temperature of said tube or hollow body at the respective region of contact.

19. The device according to claims 1, 16 and 17, **characterized in that** said second and third temperature sensing devices are preferably associated with said tube or hollow body approximately proximate to its upper portion.

20. The device according to one or more of the preceding claims, **characterized in that** said second calculation means alternately use the temperature sensed by said second temperature sensing device or the temperature sensed by said third temperature sensing device, depending on the temperature sensed by said first temperature sensing device.

21. The device according to claims 1 and 20, **characterized in that** said second calculation means approximate the condensation temperature with the temperature sensed by said second temperature sensing device when the temperature of the air in said first compartment is close to, or lower than, a preset limit temperature.

22. The device according to claims 1, 20 and 21, **characterized in that** said second calculation means approximate the condensation temperature with the temperature sensed by said third temperature sensing device when the temperature of the air in said first compartment is close to, or higher than, said preset limit temperature.

23. The device according to one or more of the preceding claims, **characterized in that** said sleeve is advantageously made of heat-resistant plastic material.

24. The device according to one or more of the preceding claims, **characterized in that** said sleeve is advantageously made of stainless metallic material.

25. The device according to one or more of the preceding claims, **characterized in that** said hollow body is advantageously made of stainless metallic material.

26. The device according to one or more of the preceding claims, **characterized in that** said hollow body is at least partially made of a stainless metallic material that is a poor heat conductor, such as stainless steel.

27. A device for sensing and adjusting humidity, particularly in an oven that comprises a first temporarily accessible compartment for containing food and comprising first heating means for said first compartment and first devices for sensing the temperature inside said first compartment, **characterized in that** said first compartment has a first opening that is connected, by way of at least one thermally insulating element, to a second opening formed in a hollow body that dissipates heat energy and is arranged externally with respect to said first compartment and is thermally insulated from it, one or more temperature sensing devices being associated with said hollow body and being connected to second means for calculating the humidity that is present in said first compartment and/or for controlling third means for adjusting the humidity as a function of a value set by the user.
